# EUROPEAN PATENT SPECIFICATION

(11) **EP 3 212 377 B1**
(45) Date of publication and mention of the grant of the patent: **22.04.2020**
(21) Application number: 15805269.6
(22) Date of filing: 29.10.2015
(51) Int. Cl.: B29C 45/17, B29C 35/16, F25B 5/02, B29B 13/02

(54) **PROCESS AND APPARATUS FOR COOLING AND CONDITIONING A MOULD.**
VERFAHREN UND VORRICHTUNG ZUM KÜHLEN UND KONDITIONIEREN EINER FORM
PROCESSUS ET APPAREIL DE REFROIDISSEMENT ET DE CONDITIONNEMENT DE UN MOULE.

(30) Priority: 31.10.2014 IT PD20140290; 02.12.2014 IT PD20140332
(43) Date of publication of application: 06.09.2017
(73) Proprietor: Pegaso Industries S.p.A., 35010 Borgoricco (PD) (IT)
(72) Inventor: PIVA, Rinaldo, I-35010 Borgoricco (PD) (IT); VIO, Valter, I-35010 Borgoricco (PD) (IT)
(74) Representative: Susanetto, Carlo
(86) International application number: PCT/IB2015/058344
(87) International publication number: WO 2016/067234

(56) References cited:
- EP-A1- 0 689 921
- EP-A2- 0 191 007
- EP-A2- 1 316 770
- WO-A2-2005/097457
- DE-A1- 10 247 868
- IT-B- 1 241 444
- US-A1- 2014 196 489
- SCIBOR D W: "HOW MOLD DEHUMIDIFICATION CAN INCREASE PRODUCTIVITY", MODERN PLASTICS INTERNATIONAL, MCGRAW-HILL,INC. LAUSANNE, CH, vol. 13, no. 9, 1 September 1983 (1983-09-01), page 145/146, XP001050644, ISSN: 0026-8283

## Description

### Technical field

The present invention relates to a process for cooling and conditioning a mould of a moulding unit of plastics materials, having the features set out in the preamble of the main claim.

The invention also relates to an apparatus for cooling and conditioning such a mould.

### Technological background

One of the techniques most commonly used in the production of objects constructed from plastics material is the moulding technique, which, as known, provides for the plastics material to be introduced in the molten or semi-molten state inside a mould, the internal cavity of which reproduces the form of the object desired, so that, in being cooled, the plastics material takes up the shape thereof. The introduction of the plastics material into the mould can be carried out by means of injection or extrusion or blow-moulding or a combination thereof, depending on the type of objects to be obtained.

The cooling of the mould, with consequent solidification of the plastics material contained therein, is generally obtained by means of contact with a cooling liquid, for example, water, which is caused to flow along a suitable circuit. In that circuit, the cooling liquid comes into contact with an evaporation unit of a refrigerating group (chiller) which provides for it to be brought to a desired temperature which is sufficiently low to be able to cool the mould as rapidly as possible.

That feature complies with the general requirement, independent of the type of plastics material processed, of having production times which are as short as possible.

Another known requirement in the technical field of moulding plastics materials relates to the need to prevent any formation of condensate inside the mould where the plastics material is introduced in the molten or semi-molten state.

In fact, that occurrence would give rise to a relevant series of disadvantages, including:
- the formation of qualitative defects of the moulded plastics object,
- the possible deformation of the surfaces of the mould, which would lead to permanent damage to the mould, and
- the possible obstruction of the micro-ventilation channels of the mould, which would inhibit the correct construction of the product to be moulded and would require an increased and accurate maintenance of the mould.

In order to prevent those disadvantages, it is known to maintain the mould in an atmosphere having a greatly reduced relative humidity.

Typically, this is brought about by confining the mould inside a substantially closed environment, such as, for example, a cabin, in which there is introduced dry air, which has previously been dehumidified.

To that end, in the cabin in which the mould is confined there is introduced through a dedicated conditioning circuit air having a humidity content which has been reduced by means of a suitable dehumidification device.

In this configuration of a known system, the conditioning circuit of the air to be introduced into the cabin is physically separate from and independent of the cooling circuit of the mould and, similarly, the control and regulation of the two circuits are also independent.

In some cases, the mould is maintained in an atmosphere having a greatly reduced relative humidity simply by blowing the dried and dehumidified air directly onto the mould, in an open environment. Even in this case, however, it is necessary to provide a conditioning circuit in which the air to be blown onto the mould is processed by means of a suitable dehumidification device.

Further known from prior art document DE 102 47 868 A1 is a process according to the preamble of claim 1.

### Summary of the invention

The problem addressed by the present invention is to provide a process and an apparatus for cooling and conditioning a mould of a moulding unit for plastics materials which are structurally and functionally configured to optimize the configuration of the known systems described above.

In accordance with that general problem, other specific objects of the invention are constituted by the reduction of the costs both of the system and of maintenance, the reduction of the overall spatial requirement of the system and the improvement of the overall energy efficiency of the system.

That problem is solved and those objects are achieved by the present invention by means of a process and an apparatus which are realized in accordance with the appended claims.

### Brief description of the drawings

The features and advantages of the invention will be better understood from the detailed description of a preferred embodiment thereof, which is illustrated by way of non-limiting example with reference to the appended drawings, in which:

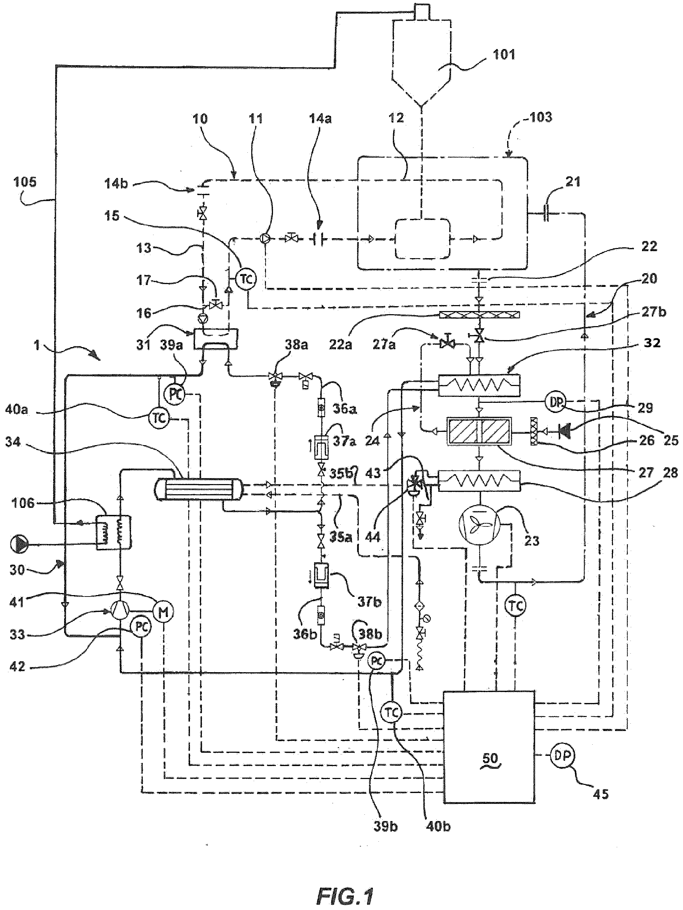

- Figure 1 is a graphical representation of the process diagram of an apparatus for cooling and conditioning a mould of a moulding unit of plastics materials produced according to the present invention;

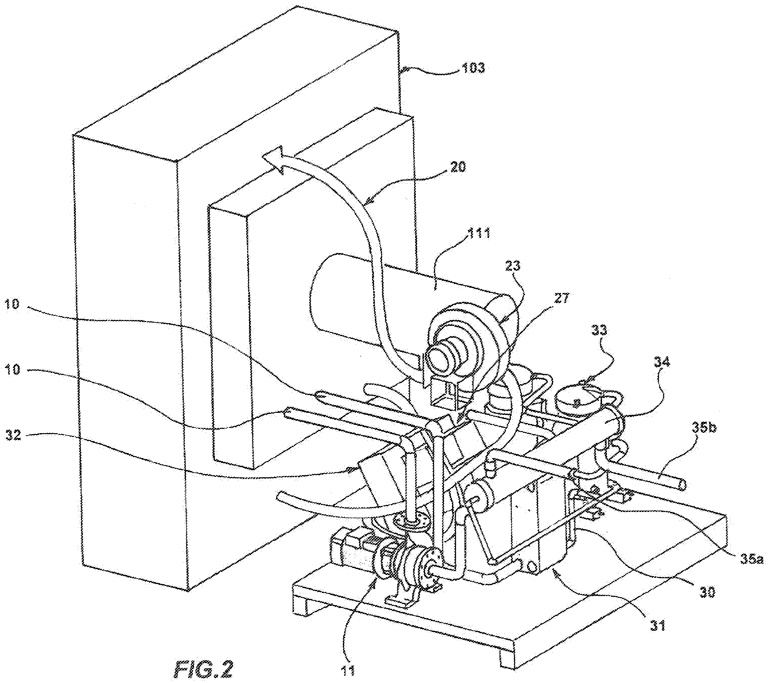

- Figure 2 is a schematic, perspective view of some elements of the apparatus of Figure 1;
- Figure 3 is a schematic view of a detail of the apparatus of Figure 2;
- Figure 4 is a general view of an example of a moulding unit for plastics materials equipped with the apparatus of Figure 1.

### Preferred embodiment of the invention

In the Figures, there is generally designated 1 an apparatus which is constructed in accordance with the present invention and which is capable of cooling and conditioning a mould 110 which belongs to a moulding unit for plastics materials which, in turn, is designated 100.

In the preferred embodiment described here, the moulding unit 100 is generally provided to transform granules of plastics material into an article having a predefined form in accordance with the general technique of injection-moulding or extrusion blow-moulding or other moulding techniques commonly used in the field.

Naturally, there is provision for the plastics material also to be able to be in the form of powder or flakes or at any rate to be able to take on any form and dimensions known in the field.

The plastics material may be based on any material which is suitable for the purpose, such as, for example, thermoplastic polymer materials, such as polyolefins, polyamides, polyesters.

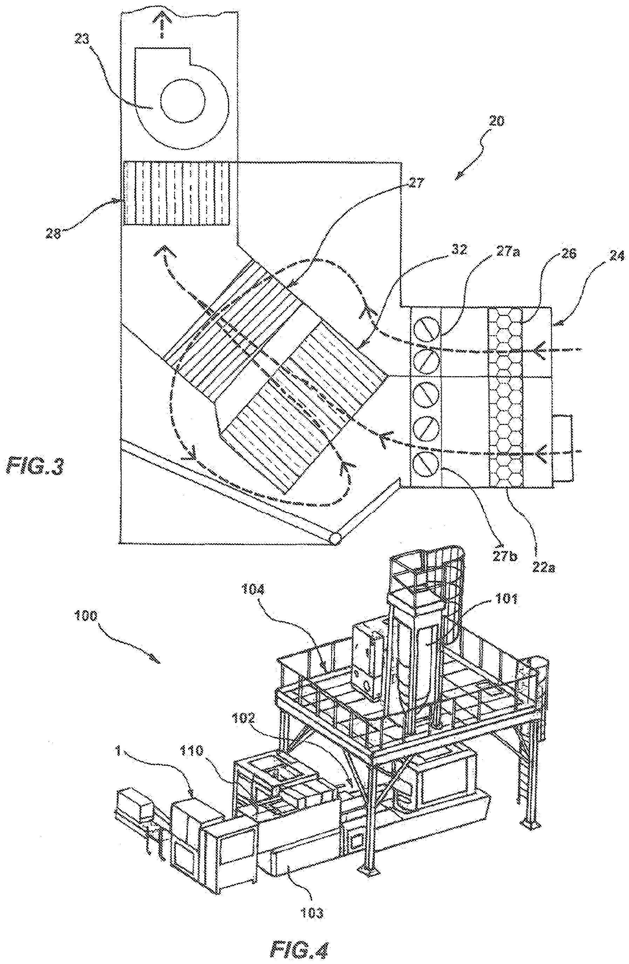

With particular reference to Figure 4, that technique provides for the granules contained in a hopper 101 to be supplied, for example, by gravity, to a machine 102, from where, once they have been brought to the molten or semi-molten state, they are injected or extruded inside the mould 110 by means of the pressing action of a helical screw. In the preferred embodiment described here, the hopper 101 is supported by a scaffolding 104.

In a preferred version of the invention, the granules of plastics material are introduced into the hopper 101 via a charging line 105.

Those components of the moulding unit 100 can be the ones used conventionally in the technical field of reference of the present invention.

The mould 110, which is also known per se in the field, comprises a pair of half-moulds which can be moved with respect to each other, for example, by means of a hydraulic system 111 having a cylinder and piston or by means of a suitable motor, between a closed position in which they are clamped one against the other, so as to contain the plastics material therein, and an open position, in which the half-moulds are moved apart from each other to allow the moulded article to be removed.

The mould 110 when it is in the closed position defines at the inner side thereof a cavity whose formation reproduces the shape of the article to be moulded, so that the plastics material which is molten or semi-molten, once it has been introduced therein, takes on the formation thereof by solidifying.

In order to reduce the solidification time of the molten plastics material inside the mould 110, the mould is suitably cooled, as described in greater detail above.

Preferably, the mould 110 is confined in a cabin 103, inside which there is introduced dehumidified air so as to prevent the formation of condensate on the walls of the mould 110.

According to a first aspect of the present invention, the apparatus 1 comprises:
- a first circuit 10 which is provided for cooling the mould 110,
- a second circuit 20 which is provided for conditioning the environment surrounding the mould 110, and
- a refrigerating circuit 30 comprising a first evaporation unit 31 which is associated with the first circuit 10 and a second evaporation unit 32 which is associated with the second circuit 20.

The refrigerating circuit 30 is a closed circuit which is filled with a suitable refrigerating fluid, for example, R410, which is placed in circulation by a compression unit 33.

The refrigerating fluid in the gaseous phase is urged by the compression unit 33 towards a condensation unit 34, in which the refrigerating fluid which is in thermal contact with a operating fluid, for example water, changes to the liquid state at a predetermined condensation temperature, for example, between 35°C and 45°C. The condensation unit 34 may be of the evaporation water tower type, of the tube bundle type or a remote condenser with direct expansion.

The operating fluid is supplied to the condensation unit 34 by means of a pipe 35a and removed therefrom by means of a pipe 35b.

Preferably, there is provided between the refrigerating circuit 30 and the charging line 105 a heat exchanger 106 which is capable of pre-heating the granules of plastics material which are supplied to the hopper 101 at the expense of the refrigerating fluid being discharged from the compression unit 33.

Preferably, the heat exchanger 106 has such dimensions that the heat given off by the refrigerating fluid to the granules of plastics material which are conveyed along the charging line 105 is less than, or, at most, equal to, the fraction of sensible heat of the refrigerating fluid vapour being discharged from the compression unit 33, preventing phenomena of condensation inside the heat exchanger 106.

In this manner, the granules of plastics material, before being introduced into the hopper 101, are heated and, at least superficially, dried in the event of water being present. This involves the advantage that the subsequent processing of the granules in the hopper 101 can be carried out under conditions of temperature and humidity which are more uniform and repeatable between one charge and another, even during the different times of the year.

The refrigerating fluid in the liquid state being discharged from the condensation unit 34 is divided into a first branch 36a, which is connected to the first evaporation unit 31, and into a second branch 36b, which is connected to the second evaporation unit 32.

There are provided on the first branch 36a a filter 37a and a first expansion valve 38a which regulates the flow of refrigerating fluid which is supplied to the first evaporation unit 31.

Downstream of the first evaporation unit 31, there are further positioned a pressure sensor 39a and a temperature sensor 40a which are capable of detecting the degree of over-heating of the refrigerating fluid being discharged from the first evaporation unit 31. If the degree of over-heating detected is greater than a predetermined value, the degree of opening of the first expansion valve 38a is increased.

Similarly, there are provided on the second branch 36b a filter 37b and a second expansion valve 38b which regulates the flow of refrigerating fluid which is supplied to the second evaporation unit 32, in accordance with the operating modes described in detail below.

Downstream of the second evaporation unit 32, there are further positioned a pressure sensor 39b and a temperature sensor 40b which are capable of detecting the degree of over-heating of the refrigerating fluid being discharged from the second evaporation unit 32. If the degree of over-heating detected is greater than a predetermined value, the degree of opening of the second expansion valve 38b is increased.

The first evaporation unit 31 is preferably a plate type evaporator while the second evaporation unit 32 is preferably an evaporator with a finned battery pack. Preferably, the first and second expansion valves 38a and 38b are of the electronic type with an integrated system with capacitive control.

The two branches 36a and 36b extending from the evaporation units 31 and 32, respectively, are joined together upstream of the compression unit 33 so as to supply the refrigerating fluid, which is now in the gaseous state, to the compression unit 33.

In this manner, the first evaporation unit 31 and the second evaporation unit 32 are arranged in parallel inside the refrigerating circuit 30.

Preferably, the compression unit 33 is actuated by a motor 41 having variable revolutions as a result, for example, of the provision of an inverter, so as to regulate the flow of refrigerating fluid flowing in the refrigerating circuit 30. Advantageously, the number of revolutions of the motor 41 is controlled by the pressure of the refrigerating fluid which is detected by a pressure sensor 42 which is positioned at the intake of the compression unit 33.

The first circuit 10 is connected to the mould 110 and comprises a pump 11 which is provided to place in circulation a cooling liquid between the mould 110 and the first evaporation unit 31.

In a preferred embodiment, the cooling liquid is water-based.

The first circuit 10 comprises a first portion 12 which is directly interfaced with the mould 110 and a second portion 13 which is interfaced with respect to the first evaporation unit 31 and connected in a removable manner to the first portion 12 by means of an inlet connection 14a and an outlet connection 14b. The first circuit 10 further comprises a temperature sensor 15 which is capable of detecting the temperature of the cooling liquid being discharged from the first evaporation unit 31 and supplied to the mould 110.

The temperature detected by the temperature sensor 15 is used in order to control the first expansion valve 38a so that the flow of refrigerating fluid supplied to the first evaporation unit 31 is regulated so as to bring the cooling liquid to a desired temperature which is imposed by the operator. The temperature is generally variable between 8°C and 20°C and normally depends on the technical characteristics of the moulding unit 100.

There is further provided in the first circuit 10 a bypass pipe 16 which is provided between the inlet and the outlet of the first evaporation unit 31 and which is provided with a valve 17 in order to reduce, where necessary, the flow of cooling liquid supplied to the first evaporation unit 31.

In the preferred embodiment described here, the mould 110 is confined in a closed environment which is delimited by the cabin 103 and the second circuit 20 is connected to an inlet 21 and an outlet 22 of the cabin 103 and comprises a fan 23 which is provided to cause dehumidified air to circulate between the second evaporation unit 32 of the refrigerating circuit 30 and the cabin 103. The cabin 103 is maintained at a pressure which is slightly higher than atmospheric pressure so as to prevent the introduction into the cabin of non-dehumidified air. However, the cabin 103 is not hermetically closed so that a portion of the dehumidified air introduced into the cabin disperses outside. In order to overcome the losses of air, which can be, for example, from about 30% to about 50%, the second circuit 20 comprises a replenishing pipe 24, through which fresh air to be introduced upstream of the second evaporation unit 32 is drawn in from the outside.

In a construction variant which is not illustrated, there is further provision for the entire flow of air introduced into the cabin 103 to be formed by fresh air. The replenishing pipe 24 comprises an inlet opening 25, through which the fresh air is drawn in, a filter 26 which provides for cleanness with respect to powders and other extraneous solid bodies.

In the preferred version described here, the second circuit 20 comprises a first heat exchanger 27 in which there are placed in thermal contact the dehumidified air being discharged from the second evaporation unit 32 and the fresh air which is drawn into the replenishment pipe 24 before the intake thereof into the second evaporation unit 32.

The first heat exchanger 27, which is preferably of the type having plates with crossing flows, therefore acts as a thermal recovery member, providing for pre-heating the fresh air at the expense of the dehumidified air being discharged from the second evaporation unit 32 which is consequently heated. At the inlet into the second evaporation unit 32, there are further provided respective valves 27a and 27b for dividing the flow of fresh air from the replenishment pipe 24 and the flow of air being discharged from the cabin 103, respectively.

According to another preferred aspect of the present invention, the second circuit 20 comprises a second heat exchanger 28 which is positioned downstream of the first heat exchanger 27 and upstream of the fan 23, in which the dehumidified air is placed in thermal contact with the operating fluid being discharged from the condensation unit 34 and supplied to the second heat exchanger 28 by the pipe 35b.

In this manner, the dehumidified air is further heated by means of the energy of the operating fluid which reaches the second heat exchanger at a temperature which is typically of approximately from 25°C to 40°C.

Preferably, only a portion of the operating fluid being discharged from the condensation unit 34 is supplied to the second heat exchanger 28 and, for this purpose, there is provided a bypass pipe 43 which allows short-circuiting of the second heat exchanger 28. The fraction of operating fluid which is supplied to the second heat exchanger 28 is determined by a three-way valve 44 which is in turn controlled by a dew-point temperature sensor 45 which is provided at the outer side of the cabin 103 and which is capable of measuring the humidity content of the environment in which the moulding unit 100 operates. According to another aspect of the present invention, the dehumidified air to be conveyed into the cabin 103 is heated, mainly by means of the heat exchanger 28, up to a temperature which is at least a few degrees higher (for example, from 2°C to 4°C higher) than the dew-point temperature of the air outside the cabin itself, as detected by the sensor 45. In this manner, the formation of condensate on the outer walls of the cabin 103 is prevented. Downstream of the second evaporation unit 32, the second circuit comprises a dew-point temperature sensor 29 which is capable of measuring the dew-point temperature of the dehumidified air which is conveyed into the cabin 103. The temperature detected by the dew-point temperature sensor 29 is used in order to control the second expansion valve 38b so that the flow of refrigerating fluid supplied to the second evaporation unit 32 is regulated so as to dehumidify the air to be conveyed to the cabin 103 up to a desired dew-point temperature. That temperature is advantageously imposed at a value of from 4°C to 6°C less than the temperature of the cooling liquid being discharged from the first evaporation unit 31.

A filter 22a is further provided in the second circuit 20 leading out of the cabin 103, upstream of the second evaporation unit 32.

The apparatus 1 further comprises a control unit 50 which is provided to receive and process the signals transmitted by the various sensors which are present in the first circuit 10, the second circuit 20 and the refrigerating circuit 30, in particular the signals from the temperature sensor 15, the pressure sensors 39a and 39b, the temperature sensors 40a and 40b, the pressure sensor 42 and the dew-point temperature sensors 29 and 45, as well as to control, also on the basis of those signals, the various components of the apparatus, in particular the first expansion valve 38a, the second expansion valve 38b, the motor (or motors) 41, the three-way valve 44, the fan 23 and the pump 11.

The apparatus 1 operates in accordance with the operating modes described below.

In accordance with the characteristics of the moulding unit 100, there is imposed the temperature of the cooling liquid which is supplied to the mould 110, for example, 15°C. This temperature constitutes the set temperature of the cooling liquid being discharged from the first evaporation unit 31 and the first expansion valve 38a is regulated so as to supply to the first evaporation unit 31 a flow of refrigerating fluid which brings the cooling liquid to that set temperature.

Automatically, therefore, there is also defined the dew-point temperature of the dehumidified air being discharged from the second evaporation unit 32, calculated on the basis of the set temperature of the cooling liquid being discharged from the first evaporation unit 31, reduced by a value between 4°C and 6°C, for example, 5°C.

In this manner, the air which is introduced into the cabin 103 is caused to always have a dew-point temperature which is less than the minimum temperature which the mould 110 can reach, preventing any possibility of condensation on the walls thereof.

With the apparatus 1 is turned on, there are started the pump 11, so as to circulate the cooling liquid in the first circuit 10, the fan 23, so as to circulate dehumidified air in the second circuit 20, and the compression unit 33, so as to circulate the refrigerating fluid in the refrigerating circuit 30.

The flow of refrigerating fluid supplied to the first evaporation unit 31 is controlled by the first expansion valve 38a on the basis of the temperature of the cooling liquid detected by the temperature sensor 15, while the flow of refrigerating fluid supplied to the second evaporation unit 32 is controlled by the second expansion valve 38b on the basis of the dew-point temperature of the dehumidified air detected by the temperature sensor 29.

The overall flow of refrigerating fluid which flows inside the refrigerating circuit 30 is automatically regulated by the motor 41 of the compression unit 33, on the basis of the pressure detected by the pressure sensor 42.

In the first circuit 10, the cooling liquid from the first evaporation unit 31 at the desired temperature is brought into thermal contact with the mould 110, where it is heated and returns to the first evaporation unit 31 in order to be cooled as far as the predetermined temperature.

In the second circuit 20, the dehumidified air urged by the fan 23 is introduced into the cabin 103, from where, as a result of the incomplete sealing thereof, it is discharged in quantities which are substantially less than the quantity introduced. The air being discharged from the cabin 103 is therefore filtered by the filter 22a and then introduced into the second evaporation unit 32, where the humidity content thereof is reduced as far as the dew-point temperature predetermined and calculated as set out above.

The air being introduced into the second evaporation unit 32 is formed by the air from the cabin 103 and the fresh air which is drawn in by the replenishment pipe 24, filtered in the filter 26 and pre-cooled in the first heat exchanger 27.

In turn, the dehumidified air being discharged from the second evaporation unit 32 and heated in the first heat exchanger 27 is further heated in the second heat exchanger 28 and supplied to the fan 23.

As mentioned above, the degree of heating of the dehumidified air is the minimum which allows (with a suitable safety margin) prevention of the formation of condensate on the outer walls of the cabin 103. Preferably, the dehumidified air is heated to a temperature of from 3°C to 5°C higher than the dew-point temperature of the external air detected by the dew-point temperature sensor 45.

In fact, it will be appreciated that further heating would instead be counterproductive from a point of view of energy, because the air being discharged from the cabin 103 is subsequently cooled in order to be dehumidified together with the fresh air.

The present invention therefore solves the problem set out above with reference to the cited prior art, providing at the same time a number of other advantages, including the fact of providing a cooling and conditioning system of the integrated mould, which allows a substantial reduction of the system, transport and control costs (both in operational terms and in maintenance terms).

In fact, as a result of the integration obtained with the present invention, the number of components necessary for the operation of the apparatus is reduced because, with respect to conventional systems, it is sufficient to have a single compression unit and a single condensation unit.

Another advantage of the present invention involves the fact of obtaining an apparatus having small dimensions and a reduced spatial requirement, which further allows positioning of the apparatus in a more advantageous position, immediately adjacent to the cabin or in any case the mould.

Another advantage of the present invention involves the relevant energy saving obtained, which is quantified at approximately 15% with respect to a conventional system.

Another advantage of the present invention involves pre-heating the granules of plastics material.

## Claims

1. A process for cooling and conditioning a mould (110) of a moulding unit (100) of plastics materials, comprising the steps of:
- cooling the mould by means of a cooling liquid which flows in a first circuit (10),
- introducing, by means of a second circuit (20), dehumidified air into a cabin (103) in which the mould is confined,
- providing a refrigerating circuit (30) comprising a first evaporation unit (31), which is associated with the first circuit (10) for cooling the cooling liquid, and a second evaporation unit (32) which is associated with the second circuit (20) for dehumidifying the air,
- heating the dehumidified air discharged from the second evaporation unit (32),
**characterized in that** the dehumidified air is heated by means of thermal contact in a second heat exchanger (28) with an operating fluid coming from a condensation unit (34) in which it has been used to condense a refrigerating fluid which flows in the refrigerating circuit.

2. A process according to claim 1, wherein the air is dehumidified at a dew-point temperature which is less than the temperature of the cooling liquid by a value between 4°C and 6°C.

3. A process according to any one of the preceding claims, wherein the flow of refrigerating fluid to the first evaporation unit (31) is controlled on the basis of the temperature of that cooling liquid being discharged from the first evaporation unit (31).

4. A process according to any one of the preceding claims, wherein the flow of refrigerating fluid to the second evaporation unit (32) is controlled on the basis of the dew-point temperature of the air being discharged from the second evaporation unit.

5. A process according to any of the preceding claims, wherein the dehumidified air which flows in the second circuit (20) is supplemented with fresh air which, before being introduced into the second evaporation unit (32) in order to be dehumidified, is placed in thermal contact in a first heat exchanger (27) with the dehumidified air being discharged from the second evaporation unit.

6. A process according to any one of the preceding claims, wherein the dehumidified air being discharged from the second evaporation unit (32) is heated to a temperature greater by at least 2°C, preferably greater by a value between 2°C and 4°C, than the dew-point temperature of the surrounding region which is external with respect to the cabin.

7. A process according to any one of the preceding claims, wherein the flow of total refrigerating fluid supplied to the first evaporation unit (31) and the second evaporation unit (32) is controlled by varying the number of revolutions of a compression unit (33) of the refrigerating circuit.

8. A process according to claim 7, wherein the number of revolutions of the compression unit (33) is controlled on the basis of the pressure of the refrigerating fluid at the intake to the compression unit.

9. A process according to any one of the preceding claims, wherein the plastics material is pre-heated by the refrigerating fluid being discharged from a compression unit (33) of the refrigerating circuit (30).

10. An apparatus for cooling and conditioning a mould (110) confined into a cabin (103) of a moulding unit of plastics materials, comprising:
- a first circuit (10) which is provided for cooling the mould and
- a second circuit (20) which is provided for introducing dehumidified air into said cabin,
- a refrigerating circuit (30) which comprises a first evaporation unit (31), which is associated with the first circuit and which is provided for cooling a cooling liquid which is conveyed in the first circuit, a second evaporation unit (32) which is associated with the second circuit (20) for dehumidifying the air, as well as a condensation unit (34) in which a refrigerating fluid of the refrigerating circuit is condensed by heat exchange with an operating fluid, **characterized in that** the second circuit (20) comprises a second heat exchanger (28) in which the dehumidified air discharged from the second evaporation unit (32) is heated by the operating fluid discharged from the condensation unit (34).

11. An apparatus according to claim 10, wherein the first evaporation unit and the second evaporation unit are supplied by the same condensation unit (34) and, in turn, supply the same compression unit (33) of the refrigerating circuit.

12. An apparatus according to claim 10 or 11, wherein the flow of refrigerating fluid supplied to the first evaporation unit (31) is controlled by a first expansion valve (38a) and the flow of refrigerating fluid supplied to the second evaporation unit (32) is controlled by a second expansion valve (38b).

13. An apparatus according to claim 12, wherein the second expansion valve (38b) is controlled in such a manner that the dew-point temperature of the air being discharged from the second evaporation unit (32) is less than the temperature of the cooling liquid being discharged from the first evaporation unit (31).

14. An apparatus according to any one of claims 10 to 13, wherein the second circuit (20) comprises (20) a replenishing pipe (24) for introducing fresh air into the second circuit as well as a first heat exchanger (27), in which there are placed in thermal contact the dehumidified air being discharged from the second evaporation unit (32) and the fresh air being introduced into the second evaporation unit.

15. An apparatus according to any one of claims 10 to 14, wherein the refrigerating circuit (30) comprises a heat exchanger (106) which is provided downstream of a compression unit of the refrigerating fluid and which is associated with a charging line of the plastics material in order to heat the plastics material at the expense of the refrigerating fluid.

## Patentansprüche

1. Verfahren zum Kühlen und Konditionieren einer Form (110) einer Formeinheit (100) aus Kunststoffmaterialien, das die Schritte aufweist:
- Kühlen der Form mittels einer Kühlflüssigkeit, die in einem ersten Kreislauf (10) fließt,
- Einleiten von entfeuchteter Luft mittels eines zweiten Kreislaufs (20) in einen Raum (103), in dem die Form eingeschlossen ist,
- Bereitstellen eines Kühlkreislaufs (30) mit einer ersten Verdampfungseinheit (31), die dem ersten Kreislauf (10) zum Kühlen der Kühlflüssigkeit zugeordnet ist, und einer zweiten Verdampfungseinheit (32), die dem zweiten Kreislauf (20) zum Entfeuchten der Luft zugeordnet ist,
- Erhitzen der entfeuchteten Luft, die aus der zweiten Verdampfungseinheit (32) abgegeben wird,
- **dadurch gekennzeichnet, dass** die entfeuchtete Luft mittels eines Wärmekontakts in einem zweiten Wärmetauscher (28) mit einer Betriebsflüssigkeit erwärmt wird, die aus einer Kondensationseinheit (34) kommt, in der sie verwendet worden ist, um eine Kühlflüssigkeit zu kondensieren, die in den Kühlkreislauf fließt.

2. Verfahren nach Anspruch 1, wobei die Luft bei einer Taupunkttemperatur entfeuchtet wird, die um einen Wert zwischen 4° C und 6° C kleiner als die Temperatur der Kühlflüssigkeit ist.

3. Verfahren nach einem der vorhergehenden Ansprüche, wobei der Fluss der Kühlflüssigkeit zur ersten Verdampfungseinheit (31) auf der Basis der Temperatur dieser Kühlflüssigkeit gesteuert wird, die von der ersten Verdampfungseinheit (31) abgegeben wird.

4. Verfahren nach einem der vorhergehenden Ansprüche, wobei der Fluss der Kühlflüssigkeit zur zweiten Verdampfungseinheit (32) auf der Basis der Taupunkttemperatur der Luft gesteuert wird, die aus der zweiten Verdampfungseinheit abgegeben wird.

5. Verfahren nach einem der vorhergehenden Ansprüche, wobei die entfeuchtete Luft, die in den zweiten Kreislauf (20) fließt, mit Frischluft ergänzt wird, die, bevor sie in die zweite Verdampfungseinheit (32) eingeleitet wird, um entfeuchtet zu werden, in einem ersten Wärmetauscher (27) in thermischen Kontakt mit der entfeuchteten Luft gebracht wird, die aus der zweiten Verdampfungseinheit abgegeben wird.

6. Verfahren nach einem der vorhergehenden Ansprüche, wobei die entfeuchtete Luft, die aus der zweiten Verdampfungseinheit (32) abgegeben wird, auf eine Temperatur erhitzt wird, die um zumindest 2° C, vorzugsweise um einen Wert, der zwischen 2° C und 4° C liegt, größer als die Taupunkttemperatur der Umgebung ist, die in Bezug auf den Raum außerhalb ist.

7. Verfahren nach einem der vorhergehenden Ansprüche, wobei der Fluss der gesamten Kühlflüssigkeit, die der ersten Verdampfungseinheit (31) und der zweiten Verdampfungseinheit (32) zugeführt wird, durch Variieren der Drehzahl einer Kompressionseinheit (33) des Kühlkreislaufs gesteuert wird.

8. Verfahren nach Anspruch 7, wobei die Drehzahl der Kompressionseinheit (33) auf der Basis des Drucks der Kühlflüssigkeit am Einlass der Kompressionseinheit gesteuert wird.

9. Verfahren nach einem der vorhergehenden Ansprüche, wobei das Kunststoffmaterial durch die Kühlflüssigkeit vorgewärmt wird, die aus einer Kompressionseinheit (33) des Kühlkreislaufs (30) abgegeben wird.

10. Vorrichtung zum Kühlen und Konditionieren einer Form (110), die in einem Raum (103) einer Formeinheit aus Kunststoffmaterialien eingeschlossen ist, umfassend:
- einen ersten Kreislauf (10), der zum Kühlen der Form vorgesehen ist, und
- einen zweiten Kreislauf (20), der zum Einleiten von entfeuchteter Luft in den Raum vorgesehen ist,
- einen Kühlkreislauf (30), der eine erste Verdampfungseinheit (31) aufweist, die dem ersten Kreislauf zugeordnet ist und die zur Kühlung einer Kühlflüssigkeit vorgesehen ist, die im ersten Kreislauf gefördert wird, eine zweite Verdampfungseinheit (32) aufweist, die dem zweiten Kreislauf (20) zum Entfeuchten der Luft zugeordnet ist, sowie eine Kondensationseinheit (34) aufweist, in der eine Kühlflüssigkeit des Kühlkreislaufs durch Wärmeaustausch mit einer Betriebsflüssigkeit kondensiert wird,
- **dadurch gekennzeichnet, dass** der zweite Kreislauf (20) einen zweiten Wärmetauscher (28) aufweist, bei dem die entfeuchtete Luft, die aus der zweiten Verdampfungseinheit (32) abgegeben wird, durch die Betriebsflüssigkeit, die aus der Kondensationseinheit (34) abgegeben wird, erwärmt wird.

11. Vorrichtung nach Anspruch 10, wobei die erste Verdampfungseinheit und die zweite Verdampfungseinheit durch dieselbe Kondensationseinheit (34) versorgt werden und die wiederum dieselbe Kompressionseinheit (33) des Kühlkreislaufs versorgt.

12. Vorrichtung nach Anspruch 10 oder 11, wobei der Fluss der Kühlflüssigkeit, die der ersten Verdampfungseinheit (31) zugeführt wird, durch ein erstes Expansionsventil (38a) gesteuert wird, und der Fluss der Kühlflüssigkeit, die der zweiten Verdampfungseinheit (31) zugeführt wird, durch ein zweites Expansionsventil (38b) gesteuert wird.

13. Vorrichtung nach Anspruch 12, wobei das zweite Expansionsventil(38b) derart gesteuert wird, dass die Taupunkttemperatur der Luft, die aus der zweiten Verdampfungseinheit (32) abgegeben wird, kleiner als die Temperatur der Kühlflüssigkeit ist, die aus der ersten Verdampfungseinheit (31) abgegeben wird.

14. Vorrichtung nach einem der Ansprüche 10 bis 13, wobei der zweite Kreislauf (20) ein Nachfüllrohr (24) zum Einleiten von Frischluft in den zweiten Kreislauf sowie einen ersten Wärmetauscher (27) aufweist, in dem die entfeuchtete Luft, die aus der zweiten Verdampfungseinheit (32) abgegeben wird, und die Frischluft, die in die zweite Verdampfungseinheit eingeleitet wird, in thermischen Kontakt gebracht werden.

15. Vorrichtung nach einem der Ansprüche 10 bis 14, wobei der Kühlkreislauf (30) einen Wärmetauscher (106) aufweist, der stromabwärts einer Kompressionseinheit der Kühlflüssigkeit vorgesehen ist und der einer Ladeleitung des Kunststoffmaterials zugeordnet ist, um das Kunststoffmaterial auf Kosten der Kühlflüssigkeit zu erwärmen.

## Revendications

1. Procédé pour le refroidissement et le conditionnement d'un moule (110) d'une unité de moulage (100) de matériaux plastiques, comprenant les étapes de :
- refroidissement du moule au moyen d'un liquide de refroidissement qui circule dans un premier circuit (10),
- introduction, au moyen d'un second circuit (20), d'air déshumidifié dans une cabine (103) dans laquelle le moule est confiné,
- fourniture d'un circuit de réfrigération (30) comprenant une première unité d'évaporation (31), qui est associée au premier circuit (10) pour refroidir le liquide de refroidissement, et une seconde unité d'évaporation (32) qui est associée au second circuit (20) pour déshumidifier l'air,
- chauffage de l'air déshumidifié évacué de la seconde unité d'évaporation (32), **caractérisé en ce que** l'air déshumidifié est chauffé au moyen d'un contact thermique dans un second échangeur de chaleur (28) avec un fluide de travail provenant d'une unité de condensation (34) dans laquelle il a été utilisé pour condenser un fluide de réfrigération qui circule dans le circuit de réfrigération.

2. Procédé selon la revendication 1, dans lequel l'air est déshumidifié à une température de point de rosée qui est inférieure à la température du liquide de refroidissement d'une valeur entre 4 °C et 6 °C.

3. Procédé selon l'une quelconque des revendications précédentes, dans lequel la circulation de fluide de réfrigération vers la première unité d'évaporation (31) est commandée sur la base de la température du liquide de refroidissement étant évacué de la première unité d'évaporation (31).

4. Procédé selon l'une quelconque des revendications précédentes, dans lequel la circulation de fluide de réfrigération vers la seconde unité d'évaporation (32) est commandée sur la base de la température de point de rosée de l'air étant évacué de la seconde unité d'évaporation.

5. Procédé selon l'une quelconque des revendications précédentes, dans lequel l'air déshumidifié qui circule dans le second circuit (20) est complété avec de l'air frais qui, avant d'être introduit dans la seconde unité d'évaporation (32) afin d'être déshumidifié, est placé en contact thermique dans un premier échangeur de chaleur (27) avec l'air déshumidifié étant évacué de la seconde unité d'évaporation.

6. Procédé selon l'une quelconque des revendications précédentes, dans lequel l'air déshumidifié étant évacué de la seconde unité d'évaporation (32) est chauffé à une température supérieure d'au moins 2 °C, de préférence supérieure d'une valeur entre 2 °C et 4 °C, à la température de point de rosée de la région environnante qui est externe par rapport à la cabine.

7. Procédé selon l'une quelconque des revendications précédentes, dans lequel la circulation de fluide de réfrigération total fourni à la première unité d'évaporation (31) et à la seconde unité d'évaporation (32) est commandée en faisant varier le nombre de révolutions d'une unité de compression (33) du circuit de réfrigération.

8. Procédé selon la revendication 7, dans lequel le nombre de révolutions de l'unité de compression (33) est commandé sur la base de la pression du fluide de réfrigération à l'admission de l'unité de compression.

9. Procédé selon l'une quelconque des revendications précédentes, dans lequel le matériau plastique est préchauffé par le fluide de réfrigération étant évacué d'une unité de compression (33) du circuit de réfrigération (30).

10. Appareil pour le refroidissement et le conditionnement d'un moule (110) confiné dans une cabine (103) d'une unité de moulage de matériaux plastiques, comprenant :
- un premier circuit (10) qui est fourni pour refroidir le moule et
- un second circuit (20) qui est fourni pour introduire de l'air déshumidifié dans ladite cabine,
- un circuit de réfrigération (30) qui comprend une première unité d'évaporation (31), qui est associée au premier circuit et qui est fournie pour refroidir un liquide de refroidissement qui est transporté dans le premier circuit, une seconde unité d'évaporation (32) qui est associée au second circuit (20) pour déshumidifier l'air, ainsi qu'une unité de condensation (34) dans laquelle un fluide de réfrigération du circuit de réfrigération est condensé par échange de chaleur avec un fluide de travail, **caractérisé en ce que** le second circuit (20) comprend un second échangeur de chaleur (28) dans lequel l'air déshumidifié évacué de la seconde unité d'évaporation (32) est chauffé par le fluide de travail évacué de l'unité de condensation (34).

11. Appareil selon la revendication 10, dans lequel la première unité d'évaporation et la seconde unité d'évaporation sont fournies par la même unité de condensation (34) et, à leur tour, fournissent la même unité de compression (33) du circuit de réfrigération.

12. Appareil selon la revendication 10 ou 11, dans lequel la circulation de fluide de réfrigération fourni à la première unité d'évaporation (31) est commandée par une première soupape de dilatation (38a) et la circulation de fluide de réfrigération fourni à la seconde unité d'évaporation (32) est commandée par une seconde soupape de dilatation (38b).

13. Appareil selon la revendication 12, dans lequel la seconde soupape de dilatation (38b) est commandée de telle sorte que la température de point de rosée de l'air étant évacué de la seconde unité d'évaporation (32) est inférieure à la température du liquide de refroidissement étant évacué de la première unité d'évaporation (31).

14. Appareil selon l'une quelconque des revendications 10 à 13, dans lequel le second circuit (20) comprend (20) un tuyau de réalimentation (24) pour introduire de l'air frais dans le second circuit, ainsi qu'un premier échangeur de chaleur (27), dans lequel sont placés en contact thermique l'air déshumidifié étant évacué de la seconde unité d'évaporation (32) et l'air frais étant introduit dans la seconde unité d'évaporation.

15. Appareil selon l'une quelconque des revendications 10 à 14, dans lequel le circuit de réfrigération (30) comprend un échangeur de chaleur (106) qui est fourni en aval d'une unité de compression du fluide de réfrigération et qui est associé à une conduite de chargement du matériau plastique afin de chauffer le matériau plastique aux dépens du fluide de réfrigération.
